# EUROPÄISCHE PATENTANMELDUNG

(11) **EP 0 955 149 A1**
(43) Veröffentlichungstag der Anmeldung: **10.11.1999**
(21) Anmeldenummer: 99108536.6
(22) Anmeldetag: 04.05.1999
(51) Int. Cl.: B29C 47/92, G01B 17/02

(54) **Extruder mit einer statische Sensoren aufweisenden Wanddickenmessvorrichtung**

(30) Priorität: 05.05.1998 DE 19819994
(71) Anmelder: CONPRO GmbH, D-32602 Vlotho (DE)
(72) Erfinder: Neumann, Ulrich, 32549 Bad Oeynhausen (DE); Büsching, Dieter, 32602 Vlotho (DE)
(74) Vertreter: Müller, Karl-Ernst, Dr., Dipl.-Ing.

(57) **Zusammenfassung**

Bei einer Extrudieranlage für Kunststoffrohre, bestehend aus einem Extruder und einer nachgeschalteten Kalibrierhülse und aus einer einen oder mehrere statisch angeordnete und zum extrudierten Rohr (10) ausgerichtete, nach dem Ultraschallprinzip arbeitende Meßköpfe (11) aufweisenden Wanddickenmeßvorrichtung, soll eine lückenlose Wanddickenmessung ermöglicht werden. Hierzu ist vorgesehen, daß die Ultraschallmeßköpfe als sich mit einer axialen Erstreckung über einen Umfangsabschnitt des extrudierten Rohres (10) erstreckende und eine einen jeweils gleichen Abstand zu der Längsmittenachse (12) des extrudierten Rohres (10) ausbildende Krümmung aufweisende Flächenkörper (11) aus in eine Kunststoffmatrix eingebetteten stabförmigen Keramikkörpern ausgebildet sind und daß die gekrümmten Flächenkörper (11) in einer einen geschlossenen Vollkreis mit radialer und axialer Überlappung der Flächenkörper (11) um das extrudierte Rohr (10) ausbildenden Anordnung auf die Oberfläche des extrudierten Rohres (10) ausgerichtet sind.

## Beschreibung

Die Erfindung betrifft eine Extrudieranlage für Kunststoffrohre, bestehend aus einem Extruder und einer nachgeschalteten Kalibrierhülse und aus einer einen oder mehrere statisch angeordnete und zum extrudierten Rohr ausgerichtete, nach dem Ultraschallprinzip arbeitende Meßköpfe aufweisenden Wanddickenmeßvorrichtung.

Eine Extrudieranlage mit den vorgenannten Merkmalen ist in der EP 0 573 907 B1 beschrieben; zur Wanddickenmessung ist bei der bekannten Extrudieranlage neben um das extrudierte Rohr umlaufend eingerichteten Ultraschallmeßköpfen auch die über den Umfang des extrudierten Rohres verteilte Anordnung von statischen Ultraschallsensoren bekannt. Da für die Wanddickenmeßvorrichtung nur die senkrecht auf die Rohroberfläche treffenden Strahlen, welche auch senkrecht zurückreflektiert werden, verwertbar sind, ist die auf der gekrümmten Rohroberfläche hierdurch definierte Meßfläche beschränkt und insbesondere bei kleineren Rohrdurchmessern mit entsprechend großem Krümmungsradius der Rohroberfläche begrenzt. Somit ergeben sich aufgrund des Abstandes der einzelnen Ultraschallmeßköpfe zueinander Totzonen, in denen kein Signalempfang erfolgt, so daß in den zugeordneten Bereichen des extrudierten Rohres eine Wanddickenmessung nicht möglich ist.

Der Erfindung liegt daher die Aufgabe zugrunde, eine bei einer Extrudieranlage eingesetzte Wanddickenmeßvorrichtung mit statisch angeordneten Ultraschallmeßköpfen derart zu verbessern, daß eine Wanddickenmessung über den gesamten Umfang des extrudierten Rohres ohne dabei auftretende Meßlücken gegeben ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die Ultraschallmeßköpfe als sich mit einer axialen Erstreckung über einen Umfangsabschnitt des extrudierten Rohres erstreckende und eine einen jeweils gleichen Abstand zu der Längsmittenachse des extrudierten Rohres ausbildende Krümmung aufweisende Flächenkörper aus in eine Kunststoffmatrix eingebetteten stabförmigen Keramikkörpern ausgebildet sind und die gekrümmten Flächenkörper in einer einen geschlossenen Volikreis um das extrudierte Rohr ausbildenden Anordnung auf die Oberfläche des extrudierten Rohres ausgerichtet sind, und daß die im Vollkreis jeweils einander benachbarten Flächenkörper einen in ihrer Umfangsrichtung ausgerichteten Überlappungsbereich aufweisen und die jeweils einander überlappenden Flächenkörper mit axialem Versatz zueinander angeordnet sind.

Als Flächenkörper ausgebildete und aus einem Gemisch von Gießharz und Keramik bestehende Ultraschallsensoren sind an sich bekannt und werden in der Literatur als Composite-Schwinger bezeichnet, beispielsweise in ECHO, Hauszeitschrift der Firma Krautkrämer GmbH & Co, 50354 Hürth, Ausgabe 37, Jg. 1998, Seiten 22/23. Die bekannten Flächenkörper sind aufgrund ihres Gießharzanteils mechanisch verformbar, so daß erfindungsgemäß für eine lückenlose Wanddickenmessung die Flächenkörper nun mit einer derartigen Krümmung versehen sind, daß ihre Anordnung in einem geschlossenen Vollkreis rund um das extrudierte Rohr bei gleichzeitiger Einhaltung eines jeweils gleichen Abstandes zur Längsmittenachse des extrudierten Rohres möglich ist, um die Laufzeit der Signale bei der Wanddickenmessung nicht zu verfälschen. Damit ist eine lückenlose Wanddickenmessung bei einem extrudierten Rohr gegeben.

Aufgrund der erfindungsgemäßen Bauform und Anordnung der als Meßköpfe dienenden Flächenkörper bzw. ihrer dem extrudierten Rohr zugewandten Meßflächen werden alle von den Flächenkörpern ausgesendeten Signale auch wieder empfangen und stehen somit für eine Auswertung zur Verfügung. Von Fall zu Fall ist eine Abstimmung der Ausbildung und Anordnung der Flächenkörper auf die Durchmesser der zu vermessenden extrudierten Rohre vorzunehmen, so daß einzelne Bauformen der Flächenkörper jeweils einem Meßbereich von Rohrdurchmessern zuzuordnen sind. Damit ist der weitere Vorteil verbunden, daß bei einem Produktwechsel innerhalb des einem jeweils als Meßkopf eingesetzten Flächenkörper zukommenden Meßbereiches weder ein Austausch von Flächenkörpern noch eine Lageanpassung der Ultraschallmeßköpfe erforderlich ist.

Um die Meßsicherheit bezüglich einer lückenlosen Wanddickenmessung zu verbessern und gleichzeitig Meßfehler in den Randbereichen der das extrudierte Rohr in einem Vollkreis umschließenden Flächenkörper auszuschließen, ist erfindungsgemäß zusätzlich vorgesehen, daß die jeweils benachbarten Flächenkörper einen in ihrer Umfangsrichtung ausgerichteten Überlappungsbereich aufweisen und die jeweils einander überlappenden Flächenkörper mit axialem Versatz zueinander angeordnet sind. Aus der mit axialem Versatz zueinander getroffenen Anordnung der einzelnen Flächenkörper ergibt sich deren Lage und Verteilung in zumindest zwei unterschiedlichen, jeweils senkrecht zur Längsmittenachse des extrudierten Rohres verlaufenden Ebenen, wobei die in den unterschiedlichen Ebenen jeweils benachbarten und einander überlappenden Flächenkörper mit ihren jeweiligen Überlappungsbereichen gegeneinander anliegen, so daß von einer Cascadenanordnung der Flächenkörper in Verlaufsrichtung des extrudierten Rohres gesprochen werden kann.

In einer Weiterbildung der Erfindung kann vorgesehen sein, daß die in einer ersten senkrecht zur Längsmittenachse des extrudierten Rohres verlaufenden Ebene angeordneten Flächenkörper in einem in Umfangsrichtung bemessenen Abstand zueinander angeordnet sind und daß die in einer einen axialen Versatz zur ersten Ebene aufweisenden zweiten Ebene angeordneten Flächenkörper unter Überbrückung des Abstandes der in der ersten Ebene angeordneten Flächenkörper angeordnet sind und daß bei symmetrischer Ausbildung die in der ersten und in der zweiten Ebene angeordneten Flächenkörper eine gleichgroße Umfangserstreckung einschließlich der sich beidseitig erstreckenden Überlappungsbereiche aufweisen. Ein derartiger Überlappungsbereich kann beispielsweise eine Erstreckung von zwei bis fünf Winkelgraden aufweisen.

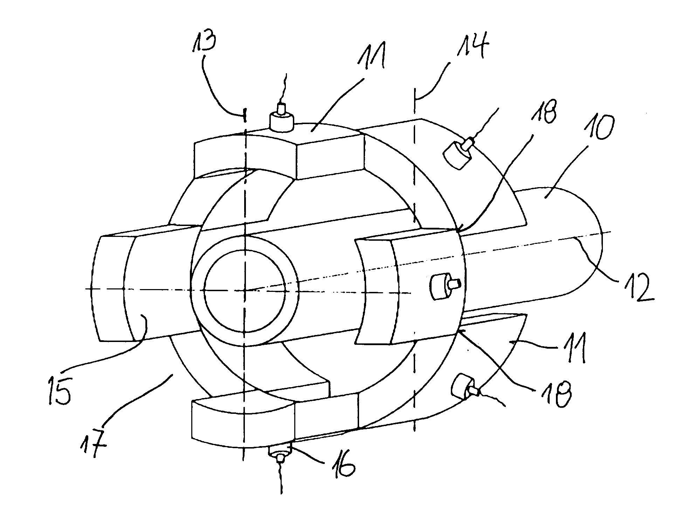

In der Zeichnung ist ein Ausführungsbeispiel der Erfindung wiedergegeben, welches nachstehend beschrieben ist. Die einzige Figur zeigt in einer schematischen Darstellung ein extrudiertes Rohr mit mehreren dessen Umfang zugeordneten, als Ultraschallmeßköpfe arbeitenden Flächenkörpern.

Die verfahrensmäßige und auch konstruktive Einbindung einer mit Ultraschallmeßköpfen arbeitenden Wanddickenmeßvorrichtung ist in der zur Gattung des Anspruchs 1 genannten EP 0 573 907 B1 ausführlich beschrieben, so daß im einzelnen auf die dortige Beschreibung einer Extrudieranlage Bezug genommen wird.

Vorliegend sind um ein extrudiertes Rohr 10 insgesamt acht Flächenkörper 11 als Ultraschallmeßköpfe angeordnet, von denen jeweils vier Flächenkörper 11 in einer ersten, senkrecht zur Längsmittenachse 12 des extrudierten Rohres 10 verlaufenden Ebene 13 und vier Flächenkörper 11 in einer zweiten, dazu mit axialem Versatz verlaufenden parallelen Ebene 14 angeordnet sind. Die einzelnen Flächenkörper 11 weisen eine der Oberfläche des extrudierten Rohres 10 zugewandte, gekrümmte Meßfläche 15 und auf ihrer Außenseite Anschlüsse 16 für die zugeordneten Signalübertragungsleitungen auf. Wie nicht weiter dargestellt, ist das extrudierte Rohr mittels einer genau arbeitenden Zentriervorrichtung geführt, so daß die einzelnen Flächenkörper 11 jeweils einen gleichen Abstand zu der Längsmittenachse des extrudierten Rohres einhalten.

Die in der ersten Ebene 13 angeordneten Flächenkörper 11 weisen in Umfangsrichtung jeweils einen Abstand 17 zueinander auf, wobei die in der zweiten Ebene 14 entsprechend angeordneten Flächenkörper 11 mit ihrer umfangsmäßigen Erstreckung den jeweiligen Abstand 17 überbrücken, so daß in beiden Ebenen 13, 14 die Flächenkörper 11 einen insgesamt geschlossenen Vollkreis um das extrudierte Rohr 10 bilden. Die Flächenkörper 11 überlappen einander jeweils mit einem Überlappungsbereich 18, wobei die in den unterschiedlichen Ebenen 13, 14 angeordneten Flächenkörper 11 mit ihren Überlappungsbereichen 18 gegeneinander anliegen.

Der Aufbau der als Ultraschallmeßköpfe ausgebildeten Flächenkörper 11 aus in einer Epoxidharz-Matrix eingelagerten Keramikstäbchen ähnlich dem Facettenauge einer Biene ist an sich bekannt und gewährleistet eine hohe Effektivität der Messung, wobei insbesondere auch hohe Frequenzen trotz der relativ großen und nicht runden Meßflächen 15 einstellbar sind; damit ist eine maßgebliche Verbesserung der Qualität der Wanddickenmessung gegeben.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Extrudieranlage für Kunststoffrohre, bestehend aus einem Extruder und einer nachgeschalteten Kalibrierhülse und aus einer einen oder mehrere statisch angeordnete und zum extrudierten Rohr (10) ausgerichtete, nach dem Ultraschallprinzip arbeitende Meßköpfe (11) aufweisenden Wanddickenmeßvorrichtung, dadurch gekennzeichnet, daß die Ultraschallmeßköpfe als sich mit einer axialen Erstreckung über einen Umfangsabschnitt des extrudierten Rohres (10) erstreckende und eine einen jeweils gleichen Abstand zu der Längsmittenachse (12) des extrudierten Rohres (10) ausbildende Krümmung aufweisende Flächenkörper (11) aus in eine Kunststoffmatrix eingebetteten stabförmigen Keramikkörpern ausgebildet sind und die gekrümmten Flächenkörper (11) in einer einen geschlossenen Vollkreis um das extrudierte Rohr (10) ausbildenden Anordnung auf die Oberfläche des extrudierten Rohres (10) ausgerichtet sind, und daß die im Vollkreis jeweils einander benachbarten Flächenkörper (11) einen in ihrer Umfangsrichtung ausgerichteten Überlappungsbereich (18) aufweisen und die jeweils einander überlappenden Flächenkörper (11) mit axialem Versatz zueinander angeordnet sind.

2. Extrudieranlage nach Anspruch 1, dadurch gekennzeichnet, daß die jeweils mit axialem Versatz zueinander angeordneten benachbarten und einander überlappenden Flächenkörper (11) mit ihren Überlappungsbereichen (18) gegeneinander anliegen.

3. Extrudieranlage nach einem der Ansprüche 1 oder 2, dadurch gekennzeichnet, daß die in einer ersten senkrecht zur Längsmittenachse (12) des extrudierten Rohres (10) verlaufenden Ebene (13) angeordneten Flächenkörper (11) in einem in Umfangsrichtung bemessenen Abstand (17) zueinander angeordnet sind und daß die in einer einen axialen Versatz zur ersten Ebene (13) aufweisenden zweiten Ebene (14) angeordneten Flächenkörper (1) unter Überbrückung des Abstandes (17) der in der ersten Ebene (13) angeordneten Flächenkörper (11) angeordnet sind und daß bei symmetrischer Ausbildung die in der ersten (13) und in der zweiten (14) Ebene angeordneten Flächenkörper (11) eine gleichgroße Umfangserstreckung einschließlich der sich beidseitig erstreckenden Überlappungsbereiche (18) aufweisen.

4. Extrudieranlage nach einem der Ansprüche 1 oder 2, dadurch gekennzeichnet, daß die in einer ersten senkrecht zur Längsmittenachse (12) des extrudierten Rohres (10) verlaufenden Ebene (13) angeordneten Flächenkörper (11) in einem in Umfangsrichtung bemessenen Abstand (17) zueinander angeordnet sind und daß die in einer einen axialen Versatz zur ersten Ebene (13) aufweisenden zweiten Ebene (14) angeordneten Flächenkörper (11) eine dem Abstand (17) der in der ersten Ebene (13) angeordneten Flächenkörper (11) entsprechende Umfangserstreckung zuzüglich des beidseitig anschließenden Überlappungsbereiches (18) aufweisen.

5. Extrudieranlage nach einem der Ansprüche 1 bis 4, dadurch gekennzeichnet, daß jeder Überlappungsbereich (18) an einem Flächenkörper (11) eine Erstreckung von zwei bis fünf Winkelgraden aufweist.
